# EUROPEAN PATENT SPECIFICATION

(11) **EP 3 475 364 B1**
(45) Date of publication and mention of the grant of the patent: **22.06.2022**
(21) Application number: 17729147.3
(22) Date of filing: 14.06.2017
(51) Int. Cl.: C08L 71/00, B01D 67/00, B01D 69/00, B01D 71/00, C08J 5/18, C08L 63/00, C08L 81/06, D01F 6/78

(54) **USE OF A SOLUTION OF POLYSULFONE IN N-ACYL-MORPHOLINE FOR THE FABRICATION OF UF MEMBRANES**
VERWENDUNG EINER LÖSUNG AUS POLYSULFONEN IN N-ACYL-MORPHOLIN ZUR HERSTELLUNG VON UF-MEMBRANEN
UTILISATION D'UNE SOLUTION DE POLYSULFONE DANS DE LA MORPHOLINE N-ACYL POUR LA FABRICATION DE MEMBRANES D'ULTRAFILTRATION

(30) Priority: 23.06.2016 EP 16175857
(43) Date of publication of application: 01.05.2019
(73) Proprietor: DuPont Safety & Construction, Inc., Wilmington, Delaware 19805 (US)
(72) Inventor: GRONWALD, Oliver, 67056 Ludwigshafen (DE); WEBER, Martin, 67056 Ludwigshafen (DE); KARL, Ulrich, 67056 Ludwigshafen (DE); MARION, Nicolas, 68300 Saint-Louis (FR)
(74) Representative: Heinemann, Monica
(86) International application number: PCT/EP2017/064469
(87) International publication number: WO 2017/220386

(56) References cited:
- EP-A1- 0 796 649
- EP-A1- 2 845 641
- WO-A1-2015/056145
- WO-A1-2015/189175

## Description

The present invention relates to a solution comprising a sulfone polymer, a water-soluble polymer and a N-acyl-morpholine of formula I 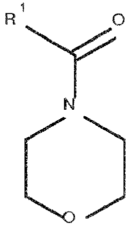 wherein R1 is a hydrogen atom or a C1- to C3 alkyl group. Furthermore, the present invention relates to a process for making a membrane wherein such solution is used.

Sulfone polymers such as polysulfone, polyethersulfone and polyphenylensulfone are high performance polymers which are used in a variety of technical applications because of their mechanical properties and their chemical and thermal stability. Sulfone polymers, however, have limited solubility in many common solvents. In particular low molecular weight fractions of sulfone polymers cause turbidity of solutions of sulfone polymers, as described in J.G Wijmans and C.A. Smolders, Eur. Polym. J. 19, No. 12, pp 1143 to 1146 (1983). US 5885456 discloses N-methylpyrrolidone (NMP), dimethylacetamide (DMAC), dimethylacrylamide (DMAD) or dimethylsulfoxide (DMSO) as suitable solvent for sulfone polymers.

One major technical application is the use of sulfone polymers as raw material for the production of membranes, in particular ultrafiltration membranes (UF membranes), as described in US 4207182 and US 5885456. Ultrafiltration membranes should have many pores. However, the size of the pores should be small. The porosity should allow a high water permeation through the membrane. On the other hand, the water should be purified as well as possible and the UF membrane should withhold any polymer even low molecular weight polymers found in the water as good as possible.

The process of producing UF membranes of sulfone polymers includes dissolving sulfone polymers and a water-soluble polymer in a solvent, coagulating the sulfone polymer from such solvent and further post-treatment steps. The selection of the solvent is essential to the process and has impact on the properties of the obtained membrane, including but not limited to the membranes' mechanical stability, water permeability and size of pores.

In GB 2047162 the use of N-formyl-morpholine and N-acetyl-morpholine for the fabrication of polysulfone membranes is disclosed. In the examples of GB 2047162 formyl-piperidine is used, only. The membranes disclosed in GB 2047162 are not suitable as UF membranes, as no water-soluble polymer is used which is essential for the porosity of the membrane.

WO 2015/056145 A1 relates to the use of a polyphenylsulfone type polyether for improving a membrane's chemical resistance. WO 2015/189175 A1 describes membranes comprising a phenoxy resin and, for example, polyethersulfones.

EP 2 845 641 A1 relates to semipermeable asymmetric membranes comprising a polyethersulfone and a polyvinylpyrrolidone. EP 0 796 649 A1 describes a process for preparing polyether ether ketone membranes.

In the field of solvents there is an ongoing demand for alternative solvents which may replace presently used solvents in specific applications. In case of sulfone polymers alternative solvents should be able to prepare solutions that allow a high content of sulfone polymer without turbidity. Regarding UF membranes made there from it, is important that a good standard of UF membrane quality is achieved. In particular, the water permeability of such membranes should be as high as possible and the pore size should be low so that even low molecular weight polymers are withheld as good as possible.

It was an object of the present invention to provide an alternative solvent for the fabrication of membranes, in particular UF membranes. The alternative solvent should fulfill the requirements listed above.

Accordingly, the solution as defined above and a process for the making of membranes there from have been found.

To the sulfone polymer

The solution comprises a sulfone polymer. The term "sulfone polymer" shall include a mixture of different sulfone polymers.

A sulfone polymer comprises -SO₂- units in the polymer, preferably in the main chain of the polymer.

Preferably, the sulfone polymer comprises at least 0.02 mol -SO₂- units, in particular at least 0.05 mol -SO₂- units per 100 grams (g) of polymer. More preferred is a sulfone polymer comprising at least 0.1 mol -SO₂- units per 100 g of polymer. Most preferred is a sulfone polymer comprising at least 0.15 SO₂- units, in particular at least 0.2 mol -SO₂- units per 100 g of polymer.

Usually a sulfone polymer does comprise at maximum 2 mols -SO₂- units, in particular at maximum 1.5 mols of -SO₂- units per 100 grams (g) of polymer. More preferred is a sulfone polymer comprising at maximum 1 mol and of -SO₂- units per 100 grams of polymer. Most preferred is a sulfone polymer comprising at maximum 0.5 of -SO₂-units per 100 grams of polymer.

Preferably, the sulfone polymer comprises aromatic groups, shortly referred to as an aromatic sulfone polymer.

In a preferred embodiment, the sulfone polymer is an aromatic sulfone polymer, which consists to at least 20% by, in particular to at least 30% weight of aromatic carbon atoms. An aromatic carbon atom is a carbon atom, which is part of an aromatic ring system.

More preferred is an aromatic sulfone polymer, which consists to at least 40 % by weight, in particular to at least 45 % by weight of aromatic carbon atoms.

Most preferred is an aromatic sulfone polymer, which consists to at least 50 % by weight, in particular to at least 55 % by weight of aromatic carbon atoms.

Preferably, the sulfone polymer may comprise aromatic groups that are selected from 1,4-phenylen, 1,3-phenylene, 1,2-phenylene, 4,4'-biphenylene, 1,4-naphthylene, or 3-chloro-1,4-phenylene.

The aromatic groups may be linked by, for example, units selected from -SO₂- -SO-, -S-, -O-, -CH₂-, -C (CH₃)₂.

In a preferred embodiment, the sulfone polymer consists to at least 80 % by weight, more preferably to at least about 90 % by weight and most preferably to at least 95, respectively at least 98 % by weight of groups selected from the above aromatic groups and linking groups.

Examples of preferred sulfone polymers are:
polysulfone of formula II 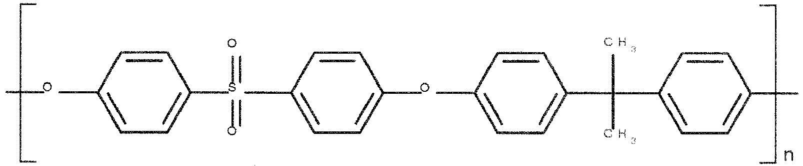 which is, for example, available from BASF under the trade name Ultrason^{®} S,
polyethersulfone of formula III 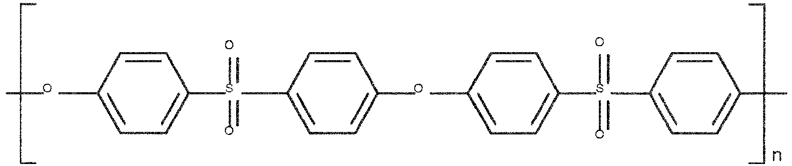 which is, for example, available from BASF under the trade name Ultrason^{®} E and
polyphenylensulfone of formula IV 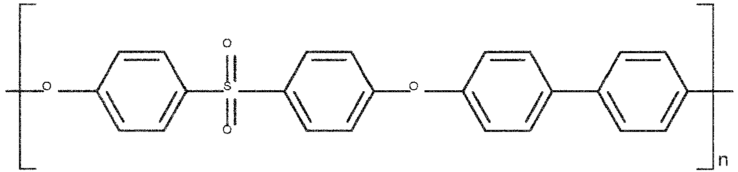 which is, for example, available from BASF under the trade name Ultrason^{®} P.

Most preferred is the polysulfone of formula II.

To the water soluble polymer

The water soluble polymer has preferably a solubility in water of at least 10 g polymer, in particular of at least 20 g polymer in 100 g water at 21°C, 1 bar. More preferred is a water-soluble polymer which has a solubility in water of at least 30 g polymer in 100 g water at 21 °C, 1 bar. Most preferred is a water-soluble polymer which has a solubility in water of at least 50 g polymer in 100 g water at 21 °C, 1 bar.

Examples of such water-soluble polymers are polymers with functional groups selected from acid groups, in particular ether groups, carboxylic acid groups, amide groups, including cyclic amide groups as lactones or ester groups, in particular carboxylic acid ester groups, or mixtures thereof.

Preferably, the water-soluble polymer comprises at least 0.01 mol, in particular 0.05 mol, more preferred at least 0.1 mol, respectively at least 0.2 mol of such functional groups in total.

Water-soluble polymers are, for example, poly alkylene ethers such as poly ethylene oxide, poly propylene oxide or poly tetrahydrofurane, poly acrylic acid, poly methacrylic acid or copolymers of acrylic acid or methacrylic acid.

Preferably, the water-soluble polymer is a vinylpyrrolidone polymer consisting to at least 50% by weight, in particular to at least 80 % by weight, more preferred to at least 90 % by weight of N-vinylpyrrolidone as polymerized units.

Most preferred is polyvinylpyrrolidone (PVP) as water-soluble polymer.

Preferably, the solution comprises from 1 to 100 parts by weight of the water soluble polymer per 100 parts by weight of the sulfone polymer.

In particular, the solution comprises at least 5 parts by weight, preferably at least 20 parts by weight per 100 g of the sulfone polymer.

More preferred is a solution comprising 20 to 80 party by weight, in particular 20 to 60 parts by weight of the water-soluble polymer per 100 g of the sulfone polymer.

Most preferred is a solution comprising 25 to 50 party by weight, in particular 25 to 40 parts by weight of the water-soluble polymer per 100 g of the sulfone polymer.
to the N-acyl-morpholine

R1 in the N-acyl-morpholine of formula I is a hydrogen atom or a C1- to C3 alkyl group.

The N-acyl-morpholine is preferably N-formyl-morpholine (R¹ = H) or N-acetyl-morpholine (R¹= methyl).

In a most preferred embodiment R¹ is N-formyl-morpholine.

The term "N-acyl-morpholine" as used herein shall include also a mixture of N-acyl-morpholines.

To the solution

The solution may comprise further solvents besides the N-acyl-morpholine of formula I, hereinafter referred to as co-solvents.

Preferred are co-solvents that are miscible with the N-acyl-morpholine in any ratio. Suitable co-solvents are, for example, N-formyl-pyrrolidine, N-acetyl-pyrrolidine, N-methylpyrrolidone (NMP), N-ethylpyrrolidon (NEP), dimethylacetamide (DMAc), dimethylformamide (DMF), dimethylacrylamide (DMAD), dimethylsulfoxide (DMSO) or alkylencarbonates as such as in particular propylene carbonate.

In a preferred embodiment at least 30 % by weight, in particular at least 50 % by weight by weight of the total amount of all solvents of the solution is N-acyl-morpholine.

In a more preferred embodiment at least 70 % by weight, in particular at least 90 % by weight by weight of the total amount of all solvents of the solution is N-acyl-morpholine. In a most preferred embodiment at least 95 % by weight, in particular at least 98 % by weight by weight of the total amount of all solvents of the solution is N-acyl-morpholine.

In a most preferred no co-solvent is used in the solution and N-acyl-morpholine of formula I is the only solvent used.

Preferably, the solution comprises 5 to 200 parts by weight, in particular 10 to 100 parts, more preferably 20 to 70 parts, respectively 25 to 50 parts by weight of the total amount of the sulfone polymer and the water-soluble polymer per 100 parts by weight of the total amount of all solvents.

In a most preferred embodiment, the solution comprises 5 to 200 parts by weight, in particular 10 to 100 parts, more preferably 20 to 70 parts, respectively 25 to 50 parts by weight of the total amount of the sulfone polymer and the water-soluble polymer per 100 parts by weight of the total amount of N-acyl-morpholines of formula I.

The solution may be prepared by adding the sulfone polymer to the solvent and dissolving the polysulfone according to any process known in the art. The dissolution process may be supported by increasing the temperature of the solution and/or by mechanical operations like stirring. In an alternative embodiment the sulfone polymer may be already synthesized in N-acyl-pyrrolidine or a solvent mixture comprising N-acyl-morpholine.

To the process of making a membrane

The above solution and preferred solutions may be used for the preparation of membranes.

In the context of this patent application a membrane shall be understood to be a semipermeable structure capable of separating two fluids or separating molecular and/or ionic components or particles from a liquid. A membrane acts as a selective barrier, allowing some particles, substances or chemicals to pass through, while retaining others. The membrane may have various geometries such as flat sheet, spiral wound, pillows, tubular, single bore hollow fiber or multiple bore hollow fiber.

For example, membranes can be reverse osmosis (RO) membranes, forward osmosis (FO) membranes, nanofiltration (NF) membranes, ultrafiltration (UF) membranes or microfiltration (MF) membranes. These membrane types are generally known in the art and are in detail described in literature. A good overview is found also in earlier European patent application No. 15185604.4 (PF 78652) which is here with incorporated herein by reference. A preferred membrane is the ultrafiltration (UF) membrane.

Preferably, membranes may be produced according to a process comprising the following steps:
a) providing a solution comprising a sulfone polymer, a water soluble polymer and a N-acyl-morpholine of formula I,
b) contacting the solution with a coagulant
c) optionally oxidizing and washing the obtained membrane

The solution in step a) corresponds to the solution described above. The water-soluble polymer helps to adjust the viscosity of the solution. The main purpose of the water-solution polymer is to support the formation of the pores. In the following coagulation step b) the water-soluble polymer becomes distributed in the coagulated membrane and thus becomes the place holder for pores.

The solution may optionally be degassed before proceeding to the next step.

In step b) the solution is contacted with a coagulant. In this step coagulation of the sulfone polymer occurs and the membrane structure is formed.

The sulfone polymer should have low solubility in the coagulant. Suitable coagulants are, for example, liquid water, water vapor, alcohols or mixtures thereof.

Suitable alcohols are, for example, mono-, di- or trialkanols like iso-propanol, ethylene glycol or propylene glycol. A preferred coagulant is liquid water.

Further details of process steps a) and b) depend on the desired geometrical structure of the membrane and the scale of production, which includes lab scale or commercial scale.

For a flat sheet membrane detailed process steps a) and b) could be as follows:
a1) providing a solution comprising a sulfone polymer, a water-soluble polymer and a N-acyl-morpholine of formula I
a2) heating the solution until a viscous solution is obtained; typically the solution is kept at a temperature of 5-250°C, preferably 25-150°C, more preferably 50-90°C
a3) further stirring of the solution until a homogenous mixture is formed; typically homogenization is finalized within 1-15 h, preferably within 0.5 to 3 hours
b1) Casting the solution obtained in a3) on a support and thereafter transferring the casted film into a coagulation bath, which is preferably water.

For the production of single bore hollow fiber or multiple bore hollow fibers step b1) may performed by extruding the solution obtained in a3) through an extrusion nozzle with the required number of hollow needles. The coagulating liquid is injected through the hollow needles into the extruded polymer during extrusion, so that parallel continuous channels extending in extrusion direction are formed in the extruded polymer. Preferably the pore size on an outer surface of the extruded membrane is controlled by bringing the outer surface after leaving the extrusion nozzle in contact with a mild coagulation agent such that the shape is fixed without active layer on the outer surface and subsequently the membrane is brought into contact with a strong coagulation agent.

Further process step c) is optional. In a preferred embodiment process step c) is performed. Oxidation as well as washing is performed in order to remove the water soluble polymer and to form the pores. Oxidation may be followed by washing or vice versa. Oxidation and washing may as well be performed simultaneously in one step.

For oxidation any oxidant may be used. Preferred is a water soluble oxidant such as in particular sodium hypochlorite.

According to the invention solutions of sulfone polymer are obtained that show no or at least less turbidity. The solutions are suitably for the manufacturing of membranes. Membranes obtained have high mechanical stability and have excellent separation characteristics. In particular, membranes have very good molecular weight cutoffs (MWCO). In a preferred embodiment, membranes M have a molecular weight cutoff, determined as described in the experimental section, of less than 20 kDa (20.000 g/mol). The membranes further have very good water permeability values. In a preferred embodiment, membranes have a pure water permeability (PWP), determined as described in the experimental section, of at least 300 kg/h m² bar.

The membranes obtained by the process of the invention may be used for any separation purpose, for example water treatment applications, treatment of industrial or municipal waste water, desalination of sea or brackish water, dialysis, plasmolysis, food processing.

### Examples

Abbreviations and compounds used in the examples:
- DMAc: Dimethylacetamide
- PWP: pure water permeation
- MWCO: molecular weight cutoff
- NFM: N-formylmorpholine

- Ultrason^{®} S 6010: Polysulfone with a viscosity number (ISO 307, 1157, 1628; in 0.01 g/mol phenol/1,2 orthodichlorobenzene 1:1 solution) of 81; a glass transition temperature (DSC, 10°C/min; according to ISO 11357-1/-2) of 187°C; a molecular weight Mw (GPC in THF, PS standard): 60000 g/mol, Mw/Mn = 3.7
- Luvitec^{®} K30: Polyvinylpyrrolidone with a solution viscosity characterised by the K-value of 30, determined according to the method of Fikentscher (Fikentscher, Cellulosechemie 13, 1932 (58))

The pure water permeation (PWP) of the membranes was tested using a pressure cell with a diameter of 60 mm using ultrapure water (salt-free water, filtered by a Millipore UF-system). A high PWP allows a high flow rate and is desired.

In a subsequent test, solutions of PEG-Standards with increasing molecular weight were used as feed to be filtered by the membrane at a pressure of 0.15 bar. By GPC-measurement of the feed and permeate, the molecular weight of the permeate of each PEG-Standard used was determined. The weight average molecular weight (MW) cut-off of the membranes (MWCO) is the molecular weight of the first PEG Standard which is withhold to at least 90% by the membrane. For example a MWCO of 18400 means that PEG of molecular weight of 18400 and higher are withhold to at least 90 %. It is desired to have a lowest MWCO as possible.

Preparation of membranes using NFM as polymer solvent

### General procedure

Into a three neck flask equipped with a magnetic stirrer there were added 75 ml of Solvent S1 as given in table 1, Luvitec K30 ("K30") as second dope polymers with the amounts given in table 1 and 19 or 25 g of polysulfone (Ultrason^{®} S 6010). The mixture was heated under gentle stirring at 60°C until a homogeneous clear viscous solution, usually referred to as dope solution was obtained. The solution was degassed overnight at room temperature.

In table 1 results are listed for DMAc (comparative 1) and NFM with (example 1) and without water soluble polymer (comparative 2).

**Table 1: Properties of the dope polymer solutions based on different solvents S1.**

| | K30 | S 6010 | Solvent S1 | appearance dope solution |
|---|---|---|---|---|
| comparative 1 | 6 | 19 | DMAc | turbid |
| comparative 2 | 0 | 25 | NFM | clear and transparent |
| example 1 | 6 | 19 | NFM | clear and transparent |

After that the membrane solution was reheated at 60°C for 2 hours and casted onto a glass plate with a casting knife (300 microns) at 60°C using an Erichsen Coating machine operating at a speed of 5 mm/min. The membrane film was allowed to rest for 30 seconds before immersion in a water bath at 25°C for 10 minutes. After the membrane had detached from the glass plate, the membrane was carefully transferred into a water bath for 12 h. Afterwards the membrane was transferred into a bath containing 2500 ppm NaOCI at 50°C for 4.5 h. The membrane was then washed with water at 60°C and one time with a 0.5 wt.-% solution of sodium bisulfite to remove active chlorine. After several washing steps with water the membrane was stored wet until characterization regarding pure water permeability (PWP) and minimum pore size (MWCO) started. Table 2 summarizes the membrane properties.

**Table 2: Compositions and properties of membranes prepared; MWCO in [Da], PWP in [kg/h m²bar].**

| | K30 | S 6010 | Solvent S1 | PWP | MWCO |
|---|---|---|---|---|---|
| comparative 1 | 6 | 19 | DMAc | 180 | 21500 |
| comparative 2 | 0 | 25 | NFM | 0 | --- |
| example 1 | 6 | 19 | NFM | 390 | 18100 |

Membranes produced with NFM according to the invention show improved separation characteristics over membranes known from the art. Membranes produced with NFM show improved (smaller) MWCO in combination with higher permeability values compared to membranes known from the art. Without water soluble polymer, the obtained membranes have no water permeability.

## Claims

1. Solution comprising a sulfone polymer, a water-soluble polymer and a N-acyl-morpholine of formula I 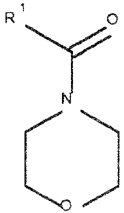 wherein R¹ is a hydrogen atom or a C1- to C3 alkyl group.

2. Solution according to claim 1 wherein the sulfone polymer comprises at least 0.02 mol -SO₂- units per 100 g of sulfone polymer.

3. Solution according to claim 1 or 2 wherein the sulfone polymer is an aromatic sulfone polymer consisting to at least 30 % by weight of aromatic carbon atoms.

4. Solution according to any of claims 1 to 3 wherein the sulfone polymer is polysulfone of formula II

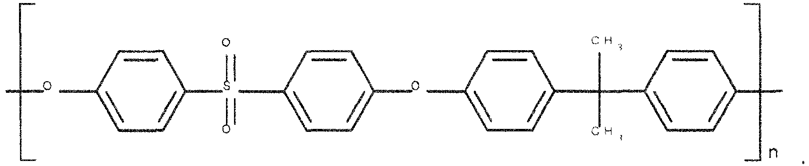

5. Solution according to any of claims 1 to 4 wherein the water soluble polymer has a solubility in water of at least 30 g polymer in 100 g water at 21 °C, 1 bar.

6. Solution according to any of claims 1 to 5 wherein the water-soluble polymer is a vinylpyrrolidone polymer consisting to at least 50% by weight of N-vinylpyrrolidone.

7. Solution according to any of claims 1 to 6 wherein the water-soluble polymer is polyvinylpyrrolidone (PVP).

8. Solution according to any of claims 1 to 7 wherein the solution comprises from 1 to 100 parts by weight of the water soluble polymer per 100 parts by weight of the sulfone polymer.

9. Solution according to any of claims 1 to 8 wherein the N-acyl-morpholine is N-formyl-morpholine.

10. Solution according to any of claims 1 to 9 wherein the solution comprises 5 to 200 parts by weight of the total amount of the sulfone polymer and the water soluble polymer per 100 parts by weight of the N-acyl-morpholine .

11. Process for making a membrane wherein a solution according to any of claims 1 to 10 is used.

12. Process for making a membrane according to claim 11 comprising the following steps:
a) providing a solution according to any of claims 1 to 10,
b) contacting the solution with a coagulant
c) optionally oxidizing and washing the obtained membrane .

13. Process according to claim 12, wherein the coagulant in step b) is water.

14. Process according to any of claims 11 to 13, wherein the weight average molecular cut-off of the membrane obtained is at maximum 20000 g/mol.

15. Process according to any of claims 11 to 14, wherein the solution comprises the N-acyl-morpholine of formula I 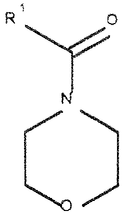 wherein R¹ is a hydrogen.

16. Membrane obtained by a process according to any of claims 11 to 14.

17. Use of the membrane according to claim 16 for water treatment applications, treatment of industrial or municipal waste water, desalination of sea or brackish water, dialysis, plasmolysis, food processing.

## Patentansprüche

1. Lösung umfassend ein Sulfonpolymer, ein wasserlösliches Polymer und ein N-Acylmorpholin der Formel I 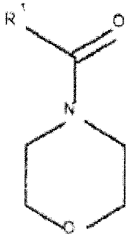 wobei R¹ ein Wasserstoffatom oder eine C₁- bis C3-Alkylgruppe ist.

2. Lösung nach Anspruch 1, wobei das Sulfonpolymer mindestens 0,02 Mol -SO₂-Einheiten pro 100 g Sulfonpolymer umfasst.

3. Lösung nach Anspruch 1 oder 2, wobei das Sulfonpolymer ein aromatisches Sulfonpolymer ist, das zu mindestens 30 Gew.-% aus aromatischen Kohlenstoffatomen besteht.

4. Lösung nach einem der Ansprüche 1 bis 3, wobei das Sulfonpolymer Polysulfon der Formel II ist

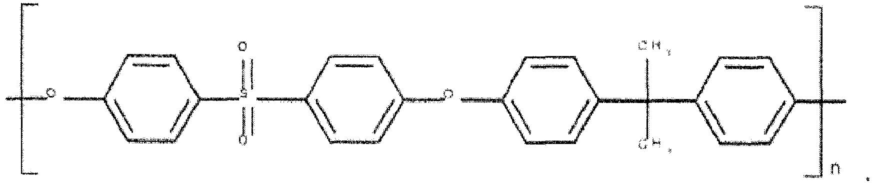

5. Lösung nach einem der Ansprüche 1 bis 4, wobei das wasserlösliche Polymer eine Löslichkeit in Wasser von mindestens 30 g Polymer in 100 g Wasser bei 21 °C, 1 bar, aufweist.

6. Lösung nach einem der Ansprüche 1 bis 5, wobei das wasserlösliche Polymer ein Vinylpyrrolidonpolymer ist, das zu mindestens 50 Gew.-% aus N-Vinylpyrrolidon besteht.

7. Lösung nach einem der Ansprüche 1 bis 6, wobei das wasserlösliche Polymer Polyvinylpyrrolidon (PVP) ist.

8. Lösung nach einem der Ansprüche 1 bis 7, wobei die Lösung 1 bis 100 Gewichtsteile des wasserlöslichen Polymers pro 100 Gewichtsteile des Sulfonpolymers umfasst.

9. Lösung nach einem der Ansprüche 1 bis 8, wobei das N-Acylmorpholin N-Formylmorpholin ist.

10. Lösung nach einem der Ansprüche 1 bis 9, wobei die Lösung 5 bis 200 Gewichtsteile der Gesamtmenge des Sulfonpolymers und des wasserlöslichen Polymers pro 100 Gewichtsteile des N-Acylmorpholins umfasst.

11. Verfahren zum Herstellen einer Membran, wobei eine Lösung nach einem der Ansprüche 1 bis 10 verwendet wird.

12. Verfahren zum Herstellen einer Membran nach Anspruch 11, umfassend die folgenden Schritte:
a) Bereitstellen einer Lösung nach einem der Ansprüche 1 bis 10,
b) Inkontaktbringen der Lösung mit einem Koagulans,
c) wahlweise Oxidieren und Waschen der erhaltenen Membran.

13. Verfahren nach Anspruch 12, wobei das Koagulans in Schritt b) Wasser ist.

14. Verfahren nach einem der Ansprüche 11 bis 13, wobei der gewichtsdurchschnittliche molekulare Grenzwert der erhaltenen Membran höchstens 20.000 g/Mol beträgt.

15. Verfahren nach einem der Ansprüche 11 bis 14, wobei die Lösung das N-Acylmorpholin der Formel I 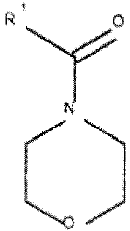 umfasst, wobei R¹ ein Wasserstoff ist.

16. Membran, die durch ein Verfahren nach einem der Ansprüche 11 bis 14 erhalten wird.

17. Verwendung der Membran nach Anspruch 16 für Wasserbehandlungsanwendungen, die Behandlung von Industrie- oder Kommunalabwasser, Entsalzung von Meeres- oder Brackwasser, Dialyse, Plasmolyse, Lebensmittelverarbeitung.

## Revendications

1. Solution comprenant un polymère sulfone, un polymère soluble dans l'eau et une *N*-acyl-morpholine de formule I 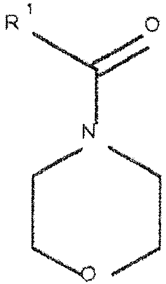 dans laquelle R¹ est un atome d'hydrogène ou un groupe alkyle en C₁ à C3.

2. Solution selon la revendication 1, dans laquelle le polymère sulfone comprend au moins 0,02 mole de motifs -SO₂- pour 100 g de polymère sulfone.

3. Solution selon la revendication 1 ou 2, dans laquelle le polymère sulfone est un polymère sulfone aromatique constitué d'au moins 30 % en poids d'atomes de carbone aromatiques.

4. Solution selon l'une quelconque des revendications 1 à 3, dans laquelle le polymère sulfone est une polysulfone de formule II

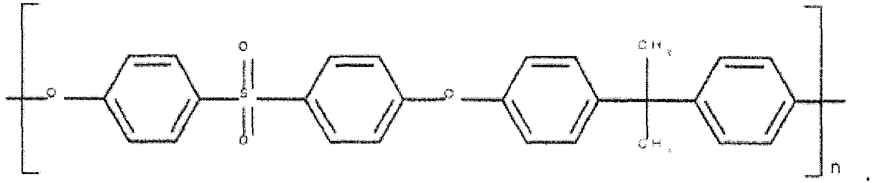

5. Solution selon l'une quelconque des revendications 1 à 4, dans laquelle le polymère soluble dans l'eau a une solubilité dans l'eau d'au moins 30 g de polymère dans 100 g d'eau à 21°C, 1 bar.

6. Solution selon l'une quelconque des revendications 1 à 5, dans laquelle le polymère soluble dans l'eau est un polymère de vinylpyrrolidone constitué d'au moins 50 % en poids de *N*-vinylpyrrolidone.

7. Solution selon l'une quelconque des revendications 1 à 6, dans laquelle le polymère soluble dans l'eau est la polyvinylpyrrolidone (PVP).

8. Solution selon l'une quelconque des revendications 1 à 7, dans laquelle la solution comprend de 1 à 100 parties en poids du polymère soluble dans l'eau pour 100 parties en poids du polymère sulfone.

9. Solution selon l'une quelconque des revendications 1 à 8, dans laquelle la *N*-acyl-morpholine est la *N*-formyl-morpholine.

10. Solution selon l'une quelconque des revendications 1 à 9, dans laquelle la solution comprend de 5 à 200 parties en poids de la quantité totale du polymère sulfone et du polymère soluble dans l'eau pour 100 parties en poids de la *N*-acyl-morpholine.

11. Procédé de fabrication d'une membrane, dans lequel une solution selon l'une quelconque des revendications 1 à 10 est utilisée.

12. Procédé de fabrication d'une membrane selon la revendication 11 comprenant les étapes suivantes:
a) la fourniture d'une solution selon l'une quelconque des revendications 1 à 10,
b) la mise en contact de la solution avec un coagulant
c) facultativement l'oxydation et le lavage de la membrane obtenue.

13. Procédé selon la revendication 12, dans lequel le coagulant dans l'étape b) est l'eau.

14. Procédé selon l'une quelconque des revendications 11 à 13, dans lequel le seuil de coupure moléculaire moyen en poids de la membrane obtenue est au maximum de 20 000 g/mole.

15. Procédé selon l'une quelconque des revendications 11 à 14, dans lequel la solution comprend la *N*-acyl-morpholine de formule I 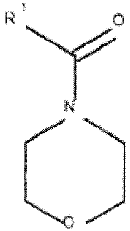 dans laquelle R¹ est un atome d'hydrogène.

16. Membrane obtenue par un procédé selon l'une quelconque des revendications 11 à 14.

17. Utilisation de la membrane selon la revendication 16 pour des applications de traitement de l'eau, de traitement d'eaux usées industrielles ou municipales, de désalinisation de l'eau ou d'eau saumâtre, de traitement de dialyse, de plasmolyse, alimentaire.
